# FASCICULE DE BREVET EUROPEEN

(11) **EP 0 359 303 B1**
(45) Date de publication et mention de la délivrance du brevet: **06.07.1994**
(21) Numéro de dépôt: 89202145.2
(22) Date de dépôt: 24.08.1989
(51) Int. Cl.: H05H 6/00, H01J 9/50

(54) **Dispositif de tube électronique scellé régénérable**
Regenerierbare, gesiegelte Elektronenröhrenvorrichtung
Regenerable sealed electronic tube device

(30) Priorité: 26.08.1988 FR 8811260
(43) Date de publication de la demande: 21.03.1990
(73) Titulaire: SOCIETE ANONYME D'ETUDES ET REALISATIONS NUCLEAIRES - SODERN, 94451 Limeil Brevannes Cédex (FR); Philips Electronics N.V., 5621 BA Eindhoven (NL)
(72) Inventeur: Cluzeau, Serge Société Civile S.P.I.D., F-75007 Paris (FR); Verschoore, Gérard Société Civile S.P.I.D., F-75007 Paris (FR)
(74) Mandataire: Charpail, François

(56) Documents cités:
- DE-A- 2 029 444
- FR-A- 1 438 429
- US-A- 3 766 390
- US-A- 3 836 785
- NUCLEAR INSTRUMENTS & METHODS IN PHYSICS RESEARCH, section B, vol. B24/25, partie II, avril 1987, pages 932-936, Elsevier Science Publishers B.V., Amsterdam, NL; R.D. HICHWA et al.: "Gas targets for the production of 150, 11C and 18F for pet studies"

## Description

L'invention concerne un tube neutronique scellé comportant d'une part des premiers éléments invariants, des deuxièmes éléments sensibles soumis à l'usure et des troisièmes éléments consommables tels qu'un gaz ou un mélange gazeux contenu dans des réservoirs pour être introduit sous faible pression dans le tube neutronique.

Un tel dispositif s'applique par exemple aux générateurs de neutrons mobiles ou transportables. Dans leur réalisation actuelle, ces générateurs sont équipés de tubes neutroniques "scellés" et non "pompés", afin de les libérer des contraintes liées au maintien du vide.

Des brevets FR-A-1 438 429 et US-A-3 766 390 sont connus des tubes neutroniques, difficilement transportables à cause des contraintes liées au maintien du vide et pour lesquels les problèmes d'étanchéité, sans être négligeables, ne sont pas draconiens.

L'appellation "scellé" désigne par contre une technologie habituellement utilisée pour garantir l'étanchéité nécessaire au fonctionnement et à l'autonomie du tube et qui isole le système de manière définitive. En contrepartie, toute intervention ultérieure est rendue impossible sans dégrader le produit. Le brevet US-A-3 836 785 décrit un tube neutronique scellé.

L'élément le plus vulnérable du tube neutronique scellé est la cible qui se trouve pulvérisée sous l'effet du bombardement du faisceau d'ions incident. Le remplacement de cet élément serait une intervention permettant de régénérer le tube en fin de vie. Une telle intervention implique la remise à l'air du tube, ce qui entraîne la détérioration des réservoirs de gaz (deutérium et tritium) qu'il faut également remplacer.

Le but de l'invention est de proposer un dispositif permettant d'assurer le remplacement des éléments défaillants dans la mesure où les manipulations sont assez légères et les pièces hors d'usage de coût inférieur à celles qui sont encore en état de fonctionner.

A cet effet l'invention est remarquable en ce qu'au moins lesdits deuxièmes éléments sensibles sont regroupés sur une première partie dudit tube rendue séparable d'une deuxième partie au moyen d'un système de liaison assurant l'étanchéité en vue d'effectuer les remplacements nécessaires à la régénération dudit tube après usure desdits deuxièmes éléments sensibles, ladite deuxième partie, qui complète ledit tube, comportant au moins les premiers éléments invariants, alors que lesdits troisièmes éléments consommables appartiennent soit à ladite première partie, soit à ladite deuxième partie.

Ledit système de liaison peut être constitué avantageusement par un ensemble de brides avec joint d'étanchéité métallique.

Ce joint de forme circulaire et de section torique déformable doit être capable de supporter les conditions de température et de pression nécessaires à la remise en état de fonctionnement du tube.

Ledit ensemble de brides est constitué de deux brides en forme de couronne circulaire respectivement solidaires de l'une et de l'autre parties séparables du tube, et d'une bride intermédiaire de même forme mais de plus faible largeur, attenant audit joint et serrée entre lesdites brides au moyen de vis de fixation.

L'épaisseur de cette bride intermédiaire doit être inférieure au diamètre extérieur de la section torique du joint, de telle façon qu'après écrasement du joint jusqu'à concurrence de l'épaisseur de la bride intermédiaire, la valeur de pression nécessaire à une bonne étanchéité est atteinte.

Un autre système de liaison est avantageusement constitué par deux couronnes métalliques respectivement solidaires de l'une et de l'autre partie du tube, appliquées l'une sur l'autre et fermées par soudure ou par thermocompressionn sur leur périphérie pour assurer l'étanchéité.

La remise en conditionnement du tube est effectuée par découpe desdites couronnes au moyen d'un outillage approprié lors de l'ouverture et par soudure ou thermocompression lors de la fermeture, successivement suivant différents niveaux de circonférences.

Ladite partie du tube sur laquelle sont regroupés les éléments remplaçables est munie d'éléments nécesaires au reconditionnement du tube tels qu'un dispositif de remise progressive du tube à la pression atmosphérique et un queusot de pompage.

La description suivante en regard des dessins annexés, le tout donné à titre d'exemple fera bien comprendre comment l'invention peut être réalisée.

Les figures 1a et 1b représentent schématiquement un dispositif permettant la régénération d'un tube neutronique conformément à l'invention.

Les figures 2a et 2b montrent une variante de réalisation du dispositif des figures 1a et 1b.

La figure 3 représente un autre dispositif de régénération conforme à l'invention.

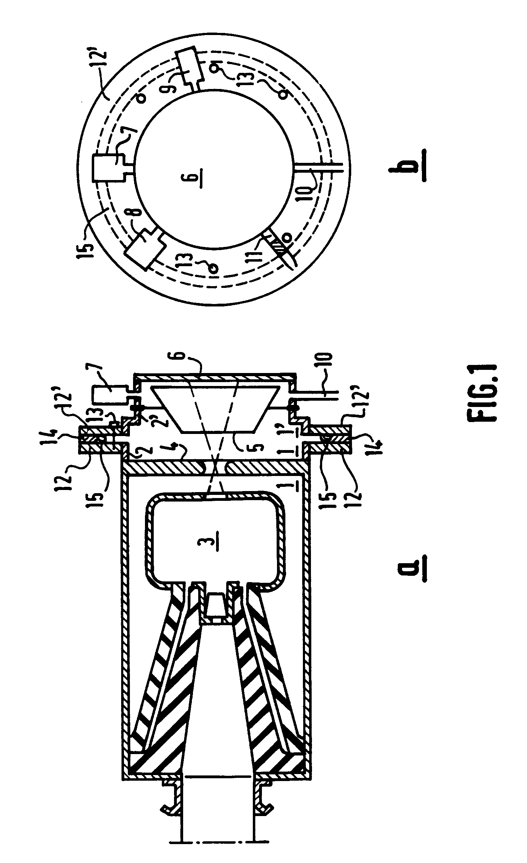

La figure 1a montre le schéma en coupe longitudinale d'un tube neutronique scindé en deux parties distinctes 1 et 1′.

La partie 1 à conserver constitue celle dont tous les éléments sont invariants et donc réutilisables après un usage déterminé du tube. Elle comporte la source d'ions 3 et l'électrode d'accélération 4 solidaires de la paroi 2.

La partie 1′ à remplacer dont la figure 1b montre une vue latérale, comporte non seulement les éléments défectueux qu'il est nécessaire de changer (cible 6 et réservoirs de titane 7 et 8) mais aussi des éléments qui ne sont pas endommagés (électrode suppresseuse 5 et jauge 9) ainsi que les éléments dont cette partie a été munie pour le reconditionnement du tube (queusot de pompage 10 et dispositif de remise progressive du tube à la pression atmosphérique 11);

La cible 6 soumise au bombardement du faisceau produit par la source d'ions 3 est l'élément le plus vulnérable et dont le remplacement impose la remise à l'air et l'ouverture du tube.

Les réservoirs de titane 7 et 8 contiennent le mélange deutérium-tritium servant à mettre le tube en pression à partir des propriétés d'équilibre du système Ti-H. A l'ouverture du tube, ou lors des opérations de recyclage, le titane chimiquement très actif au contact de l'air ambiant, perd ses propriétés de "getter", ce qui rend lesdits réservoirs inutilisables.

Le queusot de pompage 10 est un simple orifice constitué par un tube en cuivre à partir duquel on effectuera après montage de la nouvelle partie 1′ du tube, les opérations de dégazage, d'étuvage et d'imprégnation du tube en mélange deutérium-tritium avant obturation du queusot par simple pincement.

Le dispositif 11 permet de faire une admission progressive d'air ou de gaz neutre pour rétablir la pression atmosphérique à l'intérieur du tube de manière à pouvoir l'ouvrir. Il peut être constitué par une vanne ou plus simplement par un queusot à l'intérieur duquel on a introduit un filtre métallique. Ainsi l'admission d'air ou de gaz neutre est réalisée extrêmement lentement et le filtre prévient toute contamination en particules de poussières ou autres impuretés vers l'intérieur du tube.

Un système de liaison assurant l'étanchéité entre les deux parties du tube est constitué de deux brides en forme de couronne circulaire 12 et 12′ respectivement solidaires des parois 2 et 2′ du tube, et d'une bride intermédiaire 14 de même forme mais de plus faible largeur, attenant à un joint métallique 15 et serrée entre les brides 12 et 12′ au moyen de vis de fixation 13.

Le joint 15 est une couronne circulaire de section torique déformable écrasée entre les brides 12 et 12′. Il est conçu de façon à pouvoir supporter les conditions de température et de pression de la mise en conditionnement du tube.

L'épaisseur de la bride 14 est inférieure au diamètre extérieur de la section torique du joint 15 de telle sorte qu'après écrasement du joint jusqu'à concurrence de l'épaisseur de la bride, la valeur de pression nécessaire à une bonne étanchéité est atteinte.

On peut imaginer d'autres dispositions qui nécessitent uniquement le remplacement des éléments usés et détériorés du tube.

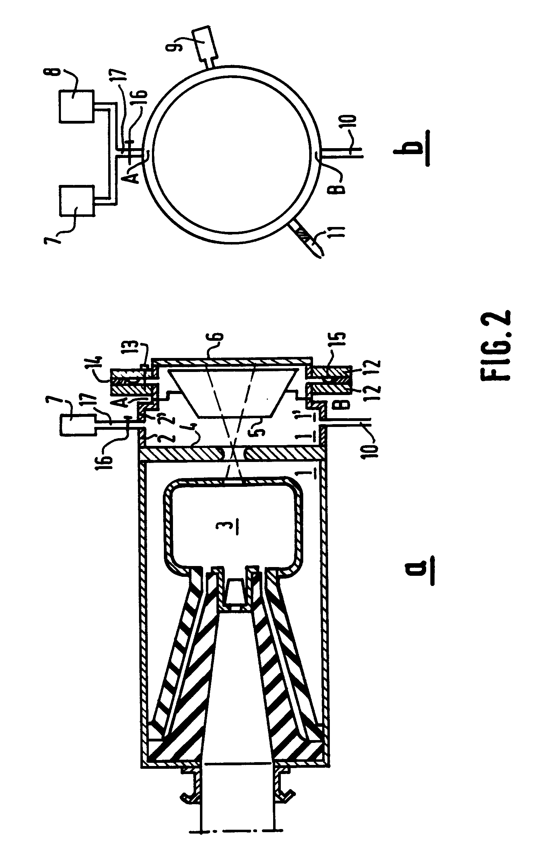

Si la séparation est effectuée juste au niveau de la cible, tel que représenté sur la figure 2a, et si l'on dispose un quelconque système de fermeture étanche 16 sur une tubulure 17 commune aux-réservoirs de gaz 7 et 8, tel que représenté sur la figure 2b, on ne remplacera que la cible et les réservoirs et on fera l'économie des éléments qu'il n'est pas nécessaire de changer dans la partie du tube située au-delà de l'électrode d'accélération.

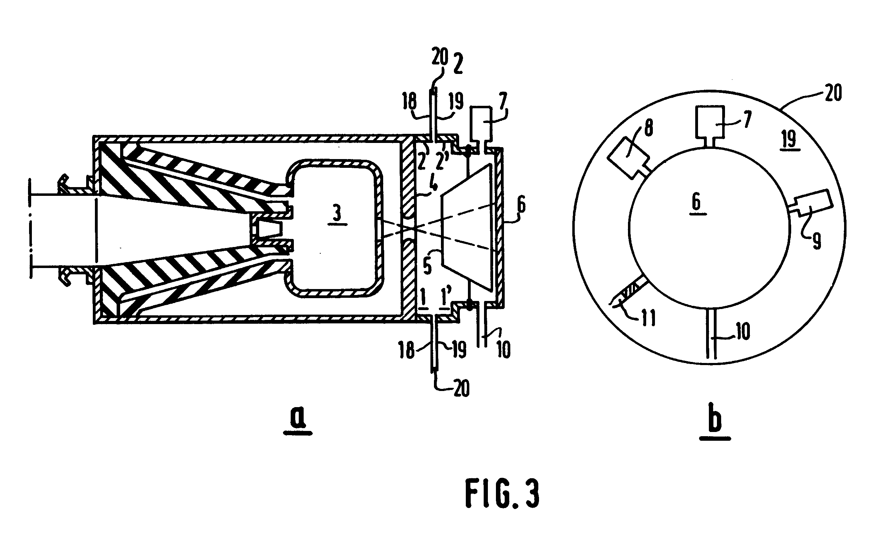

Un autre système de liaison entre les parties 1 et 1′ du même tube neutronique est représenté sur la figure 3.

Ce système est constitué par deux couronnes métalliques 18 et 19 de forme circulaire et de faible épaisseur, respectivement solidaires des parois 2 et 2′ du tube, appliquées l'une sur l'autre et fermées par soudure ou par thermocompression sur leur périphérie 20 afin d'assurer l'étanchéité.

L'ouverture du tube pour sa remise en conditionnement est effectuée par une découpe suivant une circonférence de la couronne la plus proche possible de la périphérie. Cette opération nécessite l'acquisition d'un outillage spécialisé de découpe à la presse, par molettes, par emboutissage ou par faisceau laser par exemple. On peut alors retirer la partie 1′ du tube et la remplacer par une nouvelle. Les opérations d'ouverture et de fermeture sont ainsi renouvelées successivement suivant différents niveaux décroissants de circonférences.

Les systèmes de liaison entre les deux parties du tube neutronique décrits ci-dessus présentent deux solutions extrêmes quant à la nature de difficulté de réalisation.

Le système de liaison par joint d'étanchéité métallique nécessite des épaisseurs de brides et un nombre de vis de fixation relativement importants pour tenir compte des flexions et des efforts exercés, ce qui implique une grande quantité de matière ; cela constitue un inconvénient dans le cas des tubes neutroniques à haut flux pour lesquels l'effet d'activation de la matière est proportionnel à la masse de matière qui se trouve à proximité du flux. En revanche, les opérations de montage et de démontage sont faciles et ne nécessitent pas d'outillage particulier.

Le système de liaison par soudures et découpes successives est d'une réalisation plus simple. Il est plus fiable quant aux risques de fuites. La quantité de matière offerte à l'activation est moins importante. Ce système est donc moins onéreux en lui-même que le sysètme par joint torique, mais par contre il nécessite pour effectuer les découpes successives, l'intervention d'un outillage spécialisé qui exige un investissement préalable plus important.

## Revendications

1. Tube neutronique scellé comportant d'une part des premiers éléments invariants (3, 4), des deuxièmes éléments sensibles soumis à l'usure (6) et des troisièmes éléments consommables tels qu'un gaz ou un mélange gazeux contenu dans des réservoirs (7, 8) pour être introduit sous faible pression dans ledit tube neutronique, caractérisé en ce qu'au moins lesdits deuxièmes éléments sensibles (6) sont regroupés sur une première partie (1') dudit tube rendue séparable d'une deuxième partie (1) au moyen d'un système de liaison étanche (12 à 15 - 18 à 20) en vue d'effectuer les remplacements nécessaires à la régénération dudit tube après usure desdits deuxièmes éléments sensibles (6), ladite deuxième partie (1), qui complète ledit tube, comportant au moins les premiers éléments invariants (3, 4), alors que lesdits troisièmes éléments consommables (7, 8) appartiennent soit à ladite première partie, soit à ladite deuxième partie.

2. Tube neutronique scellé selon la revendication 1, caractérisé en ce que, outre lesdits deuxièmes éléments sensibles (6), ladite première partie (1') du tube comporte lesdits troisièmes éléments consommables (7, 8).

3. Tube neutronique selon la revendication 1 ou 2, caractérisé en ce que ladite première partie du tube sur laquelle sont regroupés les éléments remplaçables est munie d'éléments nécessaires au reconditionnement du tube tels qu'un queusot de pompage (10) et un dispositif de remise progressive du tube à la pression atmosphérique (11).

4. Tube neutronique selon l'une des revendications 1 à 3, caractérisé en ce que ledit dispositif de remise progressive du tube à la pression atmosphérique lors de la séparation desdites parties est constitué par une vanne.

5. Tube neutronique selon la revendication 3, caractérisé en ce que ledit dispositif de remise progressive du tube à la pression atmosphérique lors de la séparation desdites parties est constitué par un queusot (11) dont l'intérieur est muni d'un filtre métalllique.

6. Tube neutronique selon l'une des revendications 1 à 5, caractérisé en ce que ledit système de liaison est constitué par un ensemble de brides (12, 12', 14) avec joint d'étanchéité métallique (15).

7. Tube neutronique selon la revendication 6, caractérisé en ce que ledit joint métallique est une couronne circulaire de section torique déformable (15) capable de supporter les conditions de température et de pression de la mise en conditionnement du tube.

8. Tube neutronique selon la revendication 6, caractérisé en ce que ledit ensemble de brides est constitué de deux brides en forme de couronne circulaire (12, 12') respectivement solidaires desdites parties séparables du tube (1, 1'), et d'une bride intermédiaire (14) de même forme mais de plus faible largeur, attenant audit joint (15) et serrée entre lesdites brides au moyen de vis de fixation, l'épaisseur de ladite bride intermédiaire (14) étant inférieure au diamètre extérieur de la section torique dudit joint (15), de telle façon qu'après écrasement du joint jusqu'à concurrence de l'épaisseur de la bride intermédiaire (14), la valeur de pression nécessaire à une bonne étanchéité soit atteinte.

9. Tube neutronique selon l'une des revendications 1 à 5, caractérisé en ce que ledit système de liaison est constitué par deux couronnes métalliques circulaires (18, 19) respectivement solidaires de l'une (1) et de l'autre (1') partie dudit tube, appliquées l'une sur l'autre et fermées par soudure ou par thermocompression sur leur périphérie (20) pour assurer l'étanchéité, la régénération du tube étant effectuée par découpe desdites couronnes au moyen d'un outillage approprié lors de l'ouverture et par soudure ou thermocompression lors de la fermeture, successivement suivant différents niveaux de circonférences.

## Claims

1. A sealed neutron tube, comprising invariant first elements (3, 4), sensitive second elements (6) which are subject to wear, and consumable third elements, such as a gas or a gaseous mixture contained in reservoirs (7, 8) in order to be introduced into the neutron tube under low pressure, characterized in that at least said sensitive second elements (6) are collected in a first part (1') of said tube, which part is separable from a second part (1) by way of a tight connection system (12 to 15, 18 to 20) in order to carry out the replacements necessary for reconditioning said tube after said sensitive second elements (6) have worn out, said second part (1), completing the tube, comprising at least the invariant first elements (3, 4), whereas said consumable third elements (7, 8) belong to either the first or the second part.

2. A sealed neutron tube as claimed in Claim 1, characterized in that, in addition to said sensitive second elements (6), said first part (1') of the tube comprises said consumable third elements (7, 8).

3. A neutron tube as claimed in Claim 1 or 2, characterized in that said first part of the tube in which the replaceable elements are collected is provided with elements necessary for reconditioning the tube, such as a pumping tube (10) and a device (11) for progressively exposing the tube to atmospheric pressure again.

4. A neutron tube as claimed in any one of the Claims 1 to 3, characterized in that said device for progressively exposing the tube to atmospheric pressure again upon separation of said parts is formed by a valve.

5. A neutron tube as claimed in Claim 3, characterized in that said device for progressively exposing the tube to atmospheric pressure again upon separation of said parts is formed by a tube (11) in which there is inserted a metallic filter.

6. A neutron tube as claimed in any one of the Claims 1 to 5, characterized in that said connection system is formed by an assembly of flanges (12, 12; 14) with a metallic tight joint (15).

7. A neutron tube as claimed in Claim 6, characterized in that said metallic joint is formed by a circular ring which has a deformable toroidal section and can cope with the temperature and pressures involved in the reconditioning of the tube.

8. A neutron tube as claimed in Claim 6, characterized in that said assembly of flanges is formed by two flanges (12, 12') in the form of a circular ring which are integral with the respective separable parts (1, 1') of the tube, and by an intermediate flange (14) which has the same shape but a smaller width, adjoins said joint (15) and is locked between said flanges by means of fixing screws, the thickness of said intermediate flange (14) being smaller than the external diameter of the toroidal section of said joint (15), so that the pressure value required for suitable tightness is obtained after compression of the joint to the thickness of the intermediate flange (14).

9. A neutron tube as claimed in any one of the Claims 1 to 5, characterized in that said connection system is formed by two circular metallic rings (18, 19) which are integral with the respective parts (1, 1') of said tube, are arranged one against the other, and are closed by soldering or by thermal compression along their periphery (20) in order to achieve tightness, the reconditioning of the tube being performed by cutting said rings by means of an appropriate tool for opening and by soldering or thermal compression, successively at different circumference levels, for closing.

## Patentansprüche

1. Abgedichtete Neutronenröhre mit ersten veränderlichen Elementen (3, 4), zweiten empfindlichen verschleißbehafteten Elementen (6) und dritten verbrauchbaren Elementen wie einem Gas oder einer Gasmischung in Behältern (7, 8), das bzw. die unter schwachem Druck in die Neutronenröhre eingeführt wird, dadurch gekennzeichnet, daß wenigstens die zweiten empfindlichen Elemente (6) auf einem ersten Teil (1') der Röhre neugruppiert werden, der von einem zweiten Teil (1) mit Hilfe eines geschlossenen Verbindungssystems (12 bis 15 - 18 bis 20) trennbar ist, das bezüglich der erforderlichen Erneuerungen für die Regeneration der Röhre nach dem Verschleiß der zweiten empfindlichen Elemente (6) gewährleistet, wobei der zweite Teil (1), der die Röhre vervollständigt, wenigstens die ersten unveränderlichen Elemente (3, 4) enthält, während die dritten verbrauchbaren Elemente (7, 8) dem ersten Teil oder dem zweiten Teil zugeordnet sind.

2. Abgedichtete Neutronenröhre nach Anspruch 1, dadurch gekennzeichnet, daß neben den zweiten empfindlichen Elemente (6) der erste Teil (1') der Röhre die dritten verbrauchbaren Elemente (7, 8) enthält.

3. Abgedichtete Neutronenröhre nach Anspruch 1 oder 2, dadurch gekennzeichnet, daß der erste Teil der Röhre, auf dem die ersetzbaren Elemente neugruppiert sind, mit erforderliche Elementen zum Regenerieren der Röhre versehen ist, wie mit einem Pumpstengel (10) und mit einer Einrichtung zum progressiven erneuten Unterwerfen der Röhre an den atmosphärischen Druck.

4. Neutronenröhre nach einem der Ansprüche 1 bis 3, dadurch gekennzeichnet, daß die Einrichtung zum progressiven erneuten Unterwerfen der Röhre an den atmosphärischen Druck bei der Trennung der beiden Teile aus einem Ventil besteht.

5. Neutronenröhre nach Anspruch 3, dadurch gekennzeichnet, daß die Einrichtung zum progressiven erneuten Unterwerfen der Röhre an den atmosphärischen Druck bei der Trennung der beiden Teile durch einen Pumpstengel (11) gebildet wird, dessen Innere mit einem metallischen Filter verbunden ist.

6. Neutronenröhre nach einem der Ansprüche 1 bis 5, dadurch gekennzeichnet, daß das Verbindungssystem aus einer Flanscheinheit (12, 12', 14) mit einer metallischen Dichtung (15) besteht.

7. Neutronenröhre nach Anspruch 6, dadurch gekennzeichnet, daß die metallische Dichtung ein kreisförmiger Kragen (15) mit einem verformbaren torusförmigen Querschnitt ist, der die Temperatur- und Druckbedingungen beim Betriebsfähigmachen der Röhre aushalten kann.

8. Neutronenröhre nach Anspruch 6, dadurch gekennzeichnet, daß die Flanscheinheit aus zwei Flaschen in kreisförmiger Kragenform (12, 12') mit dem einen bzw. dem anderen von der Röhre abtrennbaren Teil der Röhre (1, 1') und aus einem Zwischenflansch (14) mit derselben Form besteht, aber mit geringerer Größe, der an die Dichtung (15) gelegt und mittels Befestigungsschrauben zwischen den Flaschen zusammengedrückt wird, wobei die Dicke des Zwischenflansches (14) derart geringer ist als der Außendurchmesser des torischen Abschnitts der Dichtung (15), daß nach dem Zusammendrücken der Dichtung bis zur Dicke des Zwischenflansches (14) der erforderliche Druckwert für eine gute Abdichtung erhalten wird.

9. Neutronenröhre nach einem oder mehreren der Ansprüche 1 bis 5, dadurch gekennzeichnet, daß das Verbindungssystem aus zwei kreisförmigen metallischen Kragen (18, 19) die eine Einheit mit dem einen (1) bzw. dem anderen Teil (1') der Röhre bilden, die aufeinander angebracht und durch Verlöten oder durch Thermokompression an ihrer Peripherie (20) zum Gewährleisten der Abdichtung geschlossen sind wobei die Regeneration der Röhre durch Entfernen der Kragen mit Hilfe eines geeigneten Werkzeugs beim Öffnen und durch Verlöten oder Thermokompression beim Schließen aufeinanderfolgend auf verschiedenen Höhen des Umkreises erfolgt.
